# EUROPEAN PATENT SPECIFICATION

(11) **EP 4 517 962 B1**
(45) Date of publication and mention of the grant of the patent: **29.04.2026**
(21) Application number: 24189482.3
(22) Date of filing: 18.07.2024
(51) Int. Cl.: H01M 50/209, H01M 50/507

(54) **BATTERY PACK**
BATTERIEPACK
BLOC-BATTERIE

(30) Priority: 30.08.2023 JP 2023140193
(43) Date of publication of application: 05.03.2025
(73) Proprietor: Prime Planet Energy & Solutions, Inc., Tokyo 103-0022 (JP)
(72) Inventor: INAMURA, Takashi, Tokyo, 103-0022 (JP); KAGEYAMA, Takatoshi, Tokyo, 103-0022 (JP); AWANO, Kengo, Tokyo, 103-0022 (JP)
(74) Representative: Kuhnen & Wacker Patent- und Rechtsanwaltsbüro PartG mbB

(56) References cited:
- CN-A- 113 488 709
- CN-A- 115 621 671
- CN-U- 213 782 118
- US-A1- 2016 254 515

## Description

### CROSS REFERENCE TO RELATED APPLICATIONS

This nonprovisional application is based on Japanese Patent Application No. 2023-140193 filed on August 30, 2023 with the Japan Patent Office.

### BACKGROUND OF THE INVENTION

### Field of the Invention

The present technology relates to a battery pack.

### Description of the Background Art

As described in each of Chinese Utility Model No. CN 213 071 279 U and Chinese Utility Model No. CN 213 782 118 U, battery packs have begun to employ a Cell-to-Pack structure in which a stack including a plurality of battery cells is directly accommodated in a case without using end plates and binding bars (module structure) that restrain the plurality of battery cells. In this respect, the high-energy-density power battery pack shown in CN 213 782 118 U comprises a water-cooling integrated box body, a battery cell structure, a battery management system and a battery system distribution box, the water-cooling integrated box body comprises a lower box body structure and an upper box body cover covering the lower box body structure, and a battery cell accommodating cavity is defined between the lower box body structure and the upper box body cover. The battery cell structure comprises a plurality of single battery cells arranged in the battery cell accommodating cavity and a busbar structure electrically connected with the plurality of single battery cells. The battery management system is arranged at the end part of the water-cooling integrated box body and is electrically connected with the single battery cells through a sampling line structure. Further, the battery system distribution box is arranged at the end part of the water-cooling integrated box body, corresponds to the battery management system up and down, and is electrically connected with the single battery cells through a busbar structure.

The disclosure of document CN115621671A is also relevant to understanding the invention.

### SUMMARY OF THE INVENTION

When positioning a substrate case with respect to a stack of a plurality of battery cells, a binding bar can be used as a fixing portion for positioning in a module structure, for example; however, since no binding bar exists in the Cell-to-Pack structure, a mechanism different from that in a battery pack employing the module structure is required.

An object of the present technology is to provide a battery pack so as to simplify a manufacturing process by precisely positioning a substrate case also in a Cell-to-Pack structure.

The above object is solved by the subject-matter of claim 1. Further advantageous configurations of the invention can be drawn from the dependent claims.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is an exploded perspective view of a battery pack.
Fig. 2 is a perspective view of a battery cell.
Fig. 3 is a top view of a plate member of a bus bar module.
Fig. 4 is a perspective view showing a structure around a bus bar.
Fig. 5 is a diagram showing a positioning mechanism of the bus bar module in the Y axis direction.
Fig. 6 is a perspective view showing a structure between the bus bar module and an upper surface of the battery cell.
Fig. 7 is a perspective view showing a rear surface of the plate member of the bus bar module.
Fig. 8 is a diagram showing the positioning mechanism of the bus bar module in the X axis direction.
Fig. 9 is a diagram showing a state around a junction box accommodated in the case when viewed in the Z axis direction.
Fig. 10 is a diagram schematically showing a substrate unit.
Fig. 11 is a perspective view showing a wall portion provided in the bus bar module.
Fig. 12 is a perspective view showing a claw portion provided in the bus bar module.
Fig. 13 is a perspective view showing a fastening portion for a substrate unit and a junction box.
Fig. 14 is a first perspective view showing a modification of the substrate unit that does not fall within the scope of the present invention.
Fig. 15 is a perspective view showing a state of the structure shown in Fig. 14 when viewed in a different direction. This embodiment does not fall within the scope of the present invention.
Fig. 16 is a second perspective view showing a modification of the substrate unit that does not fall within the scope of the present invention.
Fig. 17 is a third perspective view showing a modification of the substrate unit that does not fall within the scope of the present invention.
Fig. 18 is a diagram showing a state in which the substrate unit shown in Fig. 17 is attached to a cover member of the bus bar module. This embodiment does not fall within the scope of the present invention.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other batteries such as a nickel-metal hydride battery and a sodium ion battery. In the present specification, the "battery pack" can be mounted on vehicles such as a hybrid electric vehicle (HEV), a plug-in hybrid electric vehicle (PHEV), and a battery electric vehicle (BEV). It should be noted that the use of the "battery cell" is not limited to the use in a vehicle.

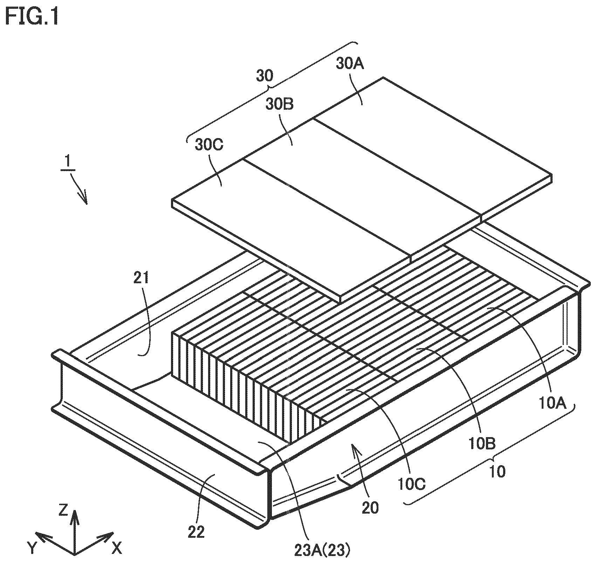

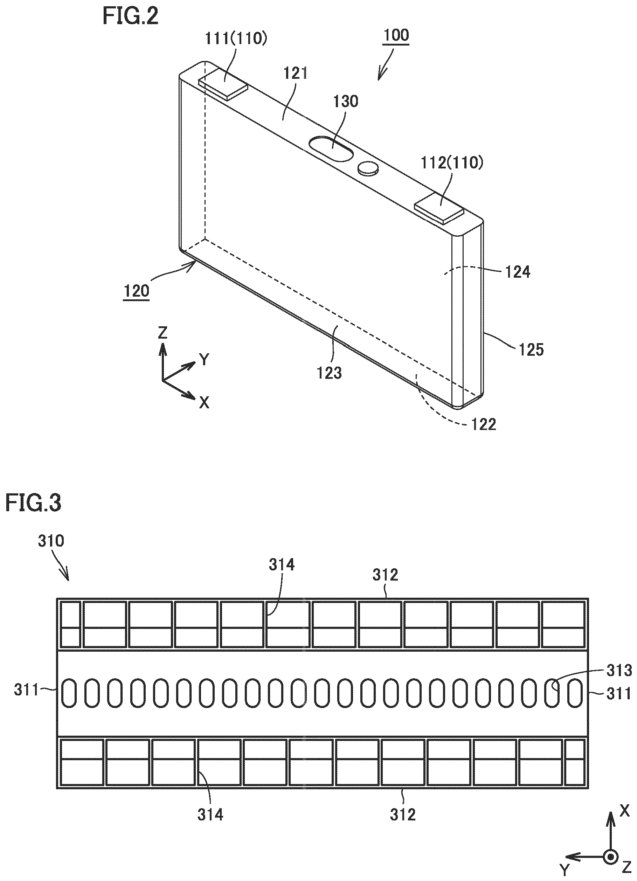

Fig. 1 is an exploded perspective view of a battery pack 1. As shown in Fig. 1, battery pack 1 includes: stacks 10 each including a plurality of battery cells 100 (see Fig. 2) arranged side by side in the Y axis direction (first direction); a case 20 that accommodates stacks 10; and bus bar modules 30 disposed on stacks 10.

Stacks 10 include a stack 10A (first stack), a stack 10B (second stack), and a stack 10C (third stack). Stacks 10A, 10B are adjacent to each other in the X axis direction (second direction). Stacks 10B, 10C are adjacent to each other in the X axis direction.

Case 20 has a pair of side walls 21 facing stacks 10A, 10B, 10C in the Y axis direction. Side walls 21 directly support stacks 10A, 10B, 10C from both sides in the Y axis direction. Thus, battery pack 1 according to the present embodiment employs a Cell-to-Pack structure in which stacks 10 each including the plurality of battery cells 100 are directly accommodated in the case.

Case 20 has: a pair of side walls 22 extending in a direction orthogonal to side walls 21; and a bottom surface 23 facing stacks 10A, 10B, 10C in the Z axis direction. Portions of bottom surface 23 on which stacks 10A, 10B, 10C are placed are formed to extend in a direction of the X-Y plane. Bottom surface 23 includes an inclined surface 23A formed at a position adjacent to stacks 10A, 10B, 10C or at a position separated from stacks 10A, 10B, 10C. Inclined surface 23A extends in a direction obliquely intersecting the X-Y plane.

Bus bar modules 30 include: a bus bar module 30A (first bus bar module) disposed on stack 10A; a bus bar module 30B (second bus bar module) disposed on stack 10B; and a bus bar module 30C (third bus bar module) disposed on stack 10C.

Fig. 2 is a perspective view showing a configuration of a battery cell 100 included in each of stacks 10A, 10B, 10C. As shown in Fig. 2, battery cell 100 has a prismatic shape. Battery cell 100 has electrode terminals 110, a housing 120, and a gas-discharge valve 130.

Electrode terminals 110 are formed on housing 120. Electrode terminals 110 have a positive electrode terminal 111 and a negative electrode terminal 112 as two electrode terminals 110 arranged side by side along the X axis direction (second direction) orthogonal to the Y axis direction (first direction). Positive electrode terminal 111 and negative electrode terminal 112 are provided to be separated from each other in the X axis direction.

Housing 120 has a substantially rectangular parallelepiped shape. An electrode assembly (not shown) and an electrolyte solution (not shown) are accommodated in housing 120. Housing 120 includes an upper surface 121, a lower surface 122, a first side surface 123, a second side surface 124, and a third side surface 125.

Upper surface 121 is a flat surface orthogonal to the Z axis direction. Electrode terminals 110 are disposed on upper surface 121. Lower surface 122 faces upper surface 121 along the Z axis direction (third direction) orthogonal to the Y axis direction (first direction) and the X axis direction (second direction).

Each of first side surface 123 and second side surface 124 is constituted of a flat surface orthogonal to the Y axis direction. Each of first side surface 123 and second side surface 124 has the largest area among the areas of the plurality of side surfaces of housing 120. Each of first side surface 123 and second side surface 124 has a rectangular shape when viewed in the Y axis direction. Each of first side surface 123 and second side surface 124 has a rectangular shape in which the X axis direction corresponds to the long-side direction and the Z axis direction corresponds to the short-side direction when viewed in the Y axis direction.

The plurality of battery cells 100 are stacked such that first side surfaces 123 of battery cells 100, 100 adjacent to each other in the Y direction face each other and second side surfaces 124 of battery cells 100, 100 adjacent to each other in the Y axis direction face each other. Thus, positive electrode terminals 111 and negative electrode terminals 112 are alternately arranged in the Y axis direction in which the plurality of battery cells 100 are stacked.

Gas-discharge valve 130 is provided in upper surface 121. When internal pressure of housing 120 becomes more than or equal to a predetermined value due to gas generated inside housing 120, gas-discharge valve 130 is opened to discharge the gas to the outside of housing 120.

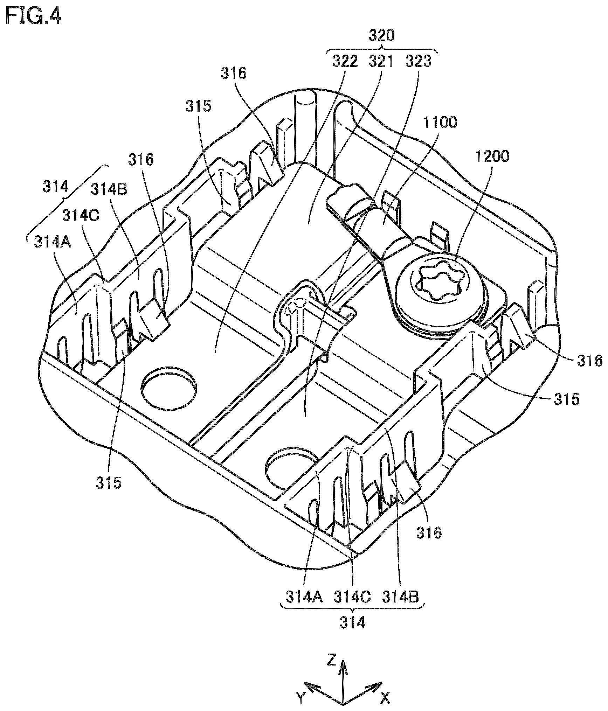

Next, a basic configuration of each bus bar module 30 will be described with reference to Figs. 3 and 4. Fig. 3 is a top view of a plate member 310 included in bus bar module 30. Fig. 4 is a perspective view showing a structure around a bus bar 320 in bus bar module 30.

Each of bus bar modules 30A, 30B, 30C includes plate member 310 shown in Fig. 3. As shown in Fig. 3, plate member 310 includes: end surfaces 311 located at end portions in the Y axis direction; end surfaces 312 located at end portions in the X axis direction; through holes 313 formed at positions corresponding to gas-discharge valves 130 of battery cells 100; and wall portions 314 that partition a space on plate member 310 into a plurality of spaces.

As shown in Fig. 4, bus bar 320 is accommodated in each space partitioned by wall portion 314. Bus bar 320 is composed of a conductor (typically, a metal member). Bus bar 320 electrically connects electrode terminals 110 of the plurality of battery cells 100 to each other. Bus bar 320 includes: a root portion 321 extending in the Y axis direction; and a connection portion 322 (first connection portion) and a connection portion 323 (second connection portion) each protruding from root portion 321 in the X axis direction. Connection portions 322, 323 are each connected to electrode terminals 110 of two adjacent battery cells 100 in the Y axis direction.

Wall portion 314 of plate member 310 includes a first portion 314A, a second portion 314B, and a third portion 314C. First portion 314A and second portion 314B are formed to extend in the X axis direction. First portion 314A and second portion 314B are located at positions separated from each other in the Y axis direction. Third portion 314C connects first portion 314A and second portion 314B.

Ribs 315 and locks 316 are formed in wall portion 314. Ribs 315 protrude from positions adjacent to third portion 314C of wall portion 314 to both sides in the Y axis direction. Ribs 315 position the plurality of adjacent bus bars 320 in the Y axis direction. Locks 316 lock bus bars 320 in the Z axis direction. The shapes and arrangements of ribs 315 and locks 316 are not limited to those shown in Fig. 4, and can be appropriately changed.

Bus bar 320 is connected to a wiring 1100. Wiring 1100 is fixed to bus bar 320 by a screw 1200. The implementations of wiring 1100 and screw 1200 are not limited to those shown in Fig. 4, and the wiring may be constituted of, for example, a flexible wiring board.

Electrode terminal 110 of battery cell 100 and bus bar 320 are positioned relative to each other in the X axis direction and the Y axis direction and are then welded and joined to each other. By precisely performing this positioning, the step of welding electrode terminal 110 and bus bar 320 can be performed in a highly efficient and high-quality manner. When accommodating bus bar 320 in the space partitioned by wall portion 314, bus bar 320 is precisely positioned with respect to plate member 310 in the X axis direction and the Y axis direction. Therefore, plate member 310 and stack 10 are required to be positioned precisely.

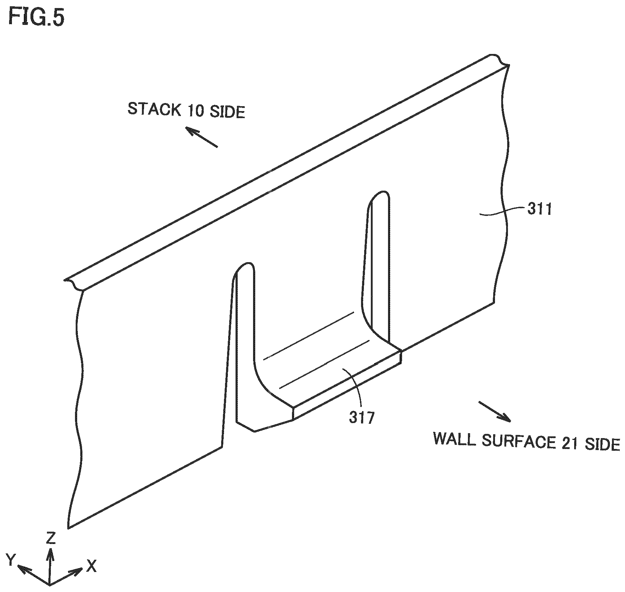

A positioning mechanism of bus bar module 30 (plate member 310) according to the present embodiment will be described with reference to Figs. 5 to 8.

Fig. 5 is a diagram showing the positioning mechanism of bus bar module 30 in the Y axis direction. As shown in Fig. 5, plate member 310 of bus bar module 30 has a protuberance (positioning mechanism) 317 that positions bus bar module 30 in the Y axis direction by biasing side wall 21 of case 20.

Protuberance 317 shown in Fig. 5 is constituted of a protuberance having a snap-fit shape and formed at end surface 311 of plate member 310. Protuberance 317 protrudes from end surface 311 of plate member 310 to the side wall 21 side. When installing plate member 310 in case 20, protuberance 317 presses side wall 21 of case 20 to bias plate member 310 toward a predetermined position. As a result, bus bar module 30 is positioned in the Y axis direction.

Protuberance 317 may be provided at each of end surfaces 311 of plate member 310 on the both sides in the Y axis direction, or may be provided only at end surface 311 of plate member 310 on one side in the Y axis direction. When protuberances 317 are provided on the both sides in the Y axis direction, plate member 310 is biased toward the center of case 20 in the Y axis direction, and is positioned at a position at which biasing forces by protuberances 317 on the both sides are balanced. When protuberance 317 is provided on one side in the Y axis direction, plate member 310 is biased toward side wall 21 opposite to the side on which protuberance 317 is provided, and is positioned with side wall 21 serving as a reference plane.

Protuberance 317 is deformed toward the central side of stack 10 as a reaction to the pressing of side wall 21 of case 20. On this occasion, protuberance 317 is preferably located at a position so as not to interfere with gas-discharge valve 130 when viewed in the Z axis direction. In this way, bus bar module 30 can be positioned in the Y axis direction without affecting discharging of the gas from gas-discharge valve 130 of battery cell 100 located at the end portion in the Y axis direction.

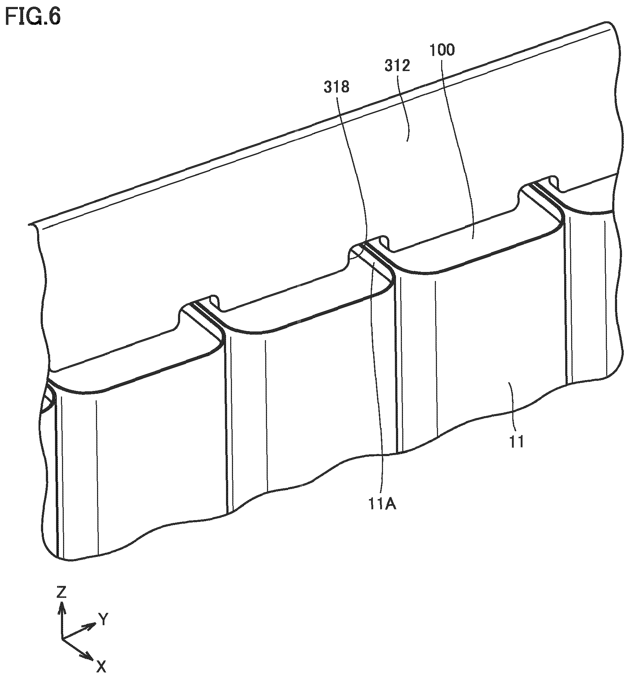

Fig. 6 is a perspective view showing a structure between bus bar module 30 and upper surface 121 of battery cell 100.

As shown in Fig. 6, stack 10 includes a separator 11 provided between the plurality of battery cells 100. Separator 11 may be a film or tape that covers first side surface 123, second side surface 124, and third side surface 125 of battery cell 100. Separator 11 may be a film that wraps around housing 120. Separator 11 may be a plate-shaped member (plate) interposed between battery cells 100 adjacent to each other. Separator 11 can be also formed by combining the film or tape with the plate-shaped member. Separator 11 has a protrusion 11A that protrudes to the plate member 310 side with respect to the plurality of battery cells 100. Plate member 310 is provided with a recess 318 that avoids protrusion 11A of separator 11.

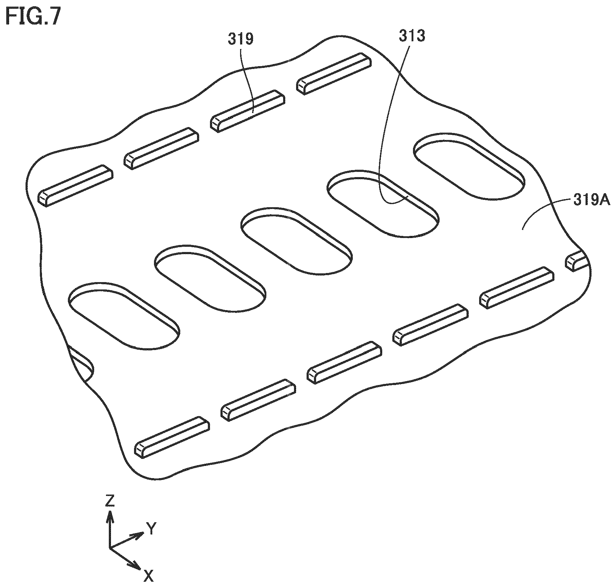

Fig. 7 is a perspective view showing the rear surface of plate member 310. As shown in Fig. 7, plate member 310 has a bottom surface 319A. Bottom surface 319A faces the upper surface of each battery cell 100. Protruding ribs 319 each protruding from bottom surface 319A of plate member 310 toward upper surface 121 of battery cell 100 are provided on portions of bottom surface 319A of plate member 310. Protruding ribs 319 are in abutment with upper surfaces 121 of battery cells 100. In the example of Fig. 7, protruding ribs 319 are intermittently formed on both sides beside through holes 313 so as to extend in the Y axis direction.

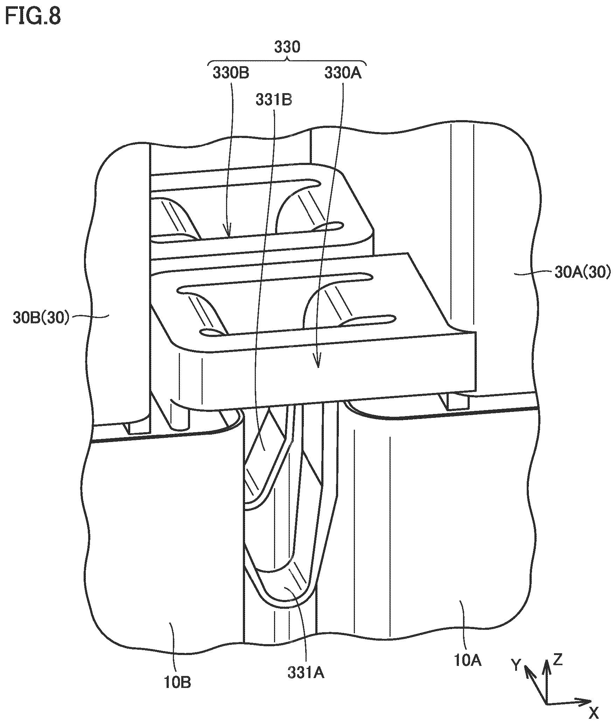

Fig. 8 is a diagram showing a positioning mechanism of bus bar module 30 in the X axis direction. As shown in Fig. 8, bus bar module 30 has an insertion mechanism 330 inserted between two adjacent stacks (stacks 10A, 10B in the example of Fig. 8) to position bus bar module 30 in the X axis direction. In the example of Fig. 8, bus bar module 30A has an insertion mechanism 330A and bus bar module 30B has an insertion mechanism 330B; however, the scope of the present technology is not limited to the configuration in which all the bus bar modules 30 have insertion mechanisms 330, and only part of the plurality of bus bar modules 30 may have insertion mechanism(s) 330.

Insertion mechanism 330A has an insertion portion 331A press-fitted between stacks 10A, 10B. When insertion portion 331A is press-fitted between stacks 10A, 10B, bus bar module 30A is biased in a direction away from stack 10B. On this occasion, insertion portion 331A is brought into abutment with the side surface of stack 10A, thereby positioning bus bar module 30A in the X axis direction.

Insertion mechanism 330B has an insertion portion 331B press-fitted between stacks 10A, 10B. When insertion portion 331B is press-fitted between stacks 10A, 10B, bus bar module 30B is biased in a direction away from stack 10A. On this occasion, insertion portion 331B is brought into abutment with the side surface of stack 10B, thereby positioning bus bar module 30B in the X axis direction.

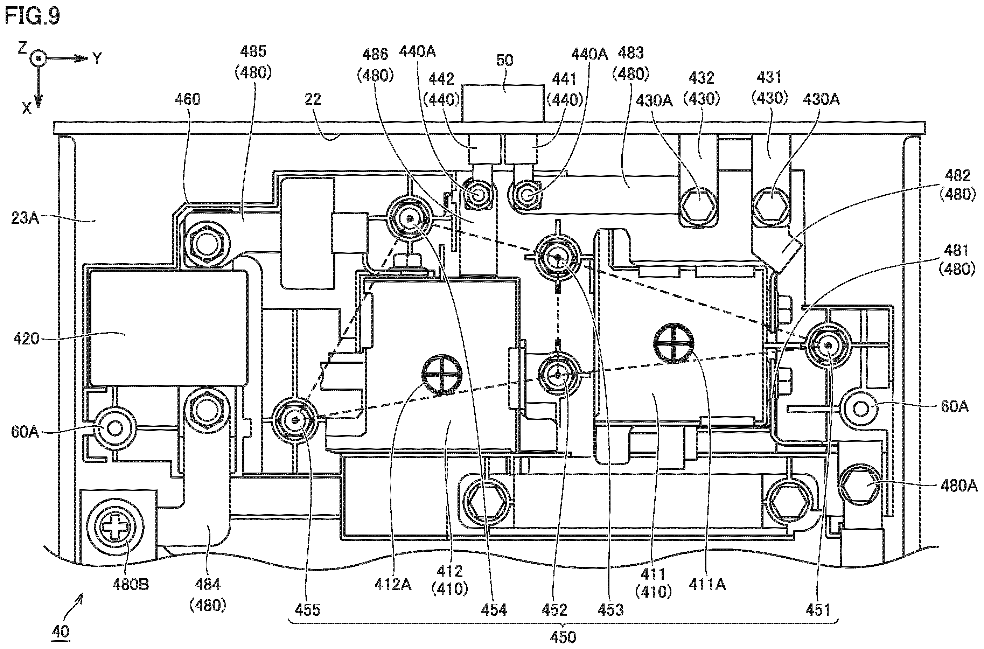

Fig. 9 is a diagram showing a state around a junction box 40 (electrical device) accommodated in case 20 when viewed in the Z axis direction.

As shown in Fig. 9, an external terminal 50 is provided on side wall 22 of case 20. Junction box 40 is disposed on inclined surface 23A located between each of stacks 10A, 10B, 10C and external terminal 50 along the X axis direction.

Junction box 40 includes relays 410, a resistor 420, a fuse mechanism 430, terminal connection portions 440, a housing 460, and bus bars 480.

Relays 410 and resistor 420 are accommodated in housing 460. Fuse mechanism 430 and terminal connection portions 440 are attached to an inner side of side wall 22 of case 20. Each of relays 410 has a weight larger than that of each of the other electrical components, such as resistor 420, accommodated in housing 460. That is, relay 410 is a heavy object having the largest weight among the electrical components accommodated in housing 460.

Housing 460 is fastened to inclined surface 23A of case 20 at fastening portions 450. In the example of Fig. 9, five fastening portions 451, 452, 453, 454, 455 are provided. In the example of Fig. 9, three fastening portions 451, 452, 453 are provided such that respective centers thereof surround a center of gravity 411A of relay 411 on the negative electrode side (broken line in Fig. 9). Four fastening portions 452, 453, 454, 455 are provided such that respective centers thereof surround a center of gravity 412A of a relay 412 on the positive electrode side (broken line in Fig. 9).

Thus, in the example of Fig. 9, at least three (for example, three or four) fastening portions 450 are disposed so as to surround each of respective centers of gravity 411A, 412A of two relays 411, 412. By disposing fastening portions 450 to surround relays 410, each of which is a heavy object, housing 460 can be stably fixed to case 20.

The plurality of battery cells 100 included in stacks 10A, 10B, 10C are connected in series, and a collective terminal therefor on the negative electrode side is connected to a bus bar 481 of junction box 40 at a fastening portion 480A. Bus bar 481 is connected to relay 411.

Relay 411 is connected to fuse mechanism 430 via a bus bar 482. Fuse mechanism 430 has a first portion 431 and a second portion 432, and a melting/disconnection portion is provided between first portion 431 and second portion 432. First portion 431 and the second portion of fuse mechanism 430 are respectively connected to bus bars 482, 483 via fastening portions 430A. Thus, bus bar 482 and bus bar 483 are connected to each other via fuse mechanism 430. The other end of bus bar 483 is connected to a terminal connection portion 441 via a fastening portion 440A.

A collective terminal on the positive electrode side for the plurality of battery cells 100 included in stacks 10A, 10B, 10C are connected to a bus bar 484 of junction box 40 at a fastening portion 480B. Bus bar 484 is connected to resistor 420. Resistor 420 is connected to relay 412 via a bus bar 485. Relay 412 is connected to a terminal connection portion 442 via a bus bar 486.

Each of fastening portions 430A, 440A is constituted of a fastening member such as a bolt. Each of terminal connection portions 441, 442 is electrically connected to external terminal 50. Thus, external terminal 50 constitutes a power feeding port for battery cells 100 and junction box 40 accommodated in case 20.

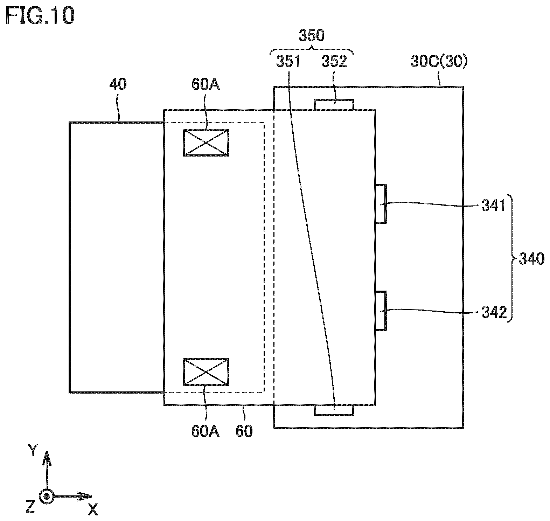

Fig. 10 is a diagram schematically showing a substrate unit 60. Substrate unit 60 includes a substrate electrically connected to the plurality of battery cells 100 and junction box 40.

As shown in Fig. 10, substrate unit 60 is disposed to be partially located on bus bar module 30C. In the example of Fig. 10, substrate unit 60 is disposed to extend from above bus bar module 30C to above junction box 40. Substrate unit 60 may be entirely disposed on bus bar module 30. Substrate unit 60 is fastened to junction box 40 at fastening portions 60A.

Bus bar module 30 has wall portions 340 and claw portions 350. Wall portions 340 include two wall portions 341, 342, and substrate unit 60 can be positioned in the X axis direction by pressing substrate unit 60 against wall portions 341, 342. Hence, each wall portion 340 can constitute a "positioning mechanism" that positions substrate unit 60 in the X axis direction before or when fastening substrate unit 60 to junction box 40.

Claw portions 350 include a pair of claw portions 351, 352 provided to sandwich substrate unit 60 in the Y axis direction. Claw portions 351, 352 are each engaged with substrate unit 60. Each claw portion 350 can constitute a "positioning mechanism" that positions substrate unit 60 in the Y axis direction. Further, claw portion 350 can constitute a "locking mechanism" that suppresses displacement of substrate unit 60 in the Z axis direction.

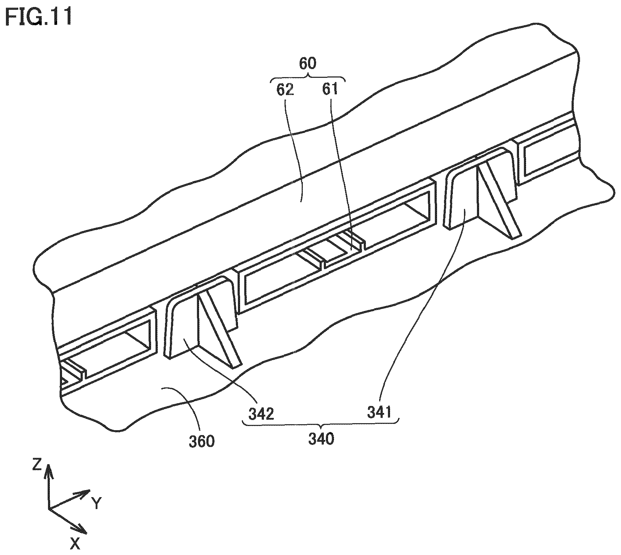

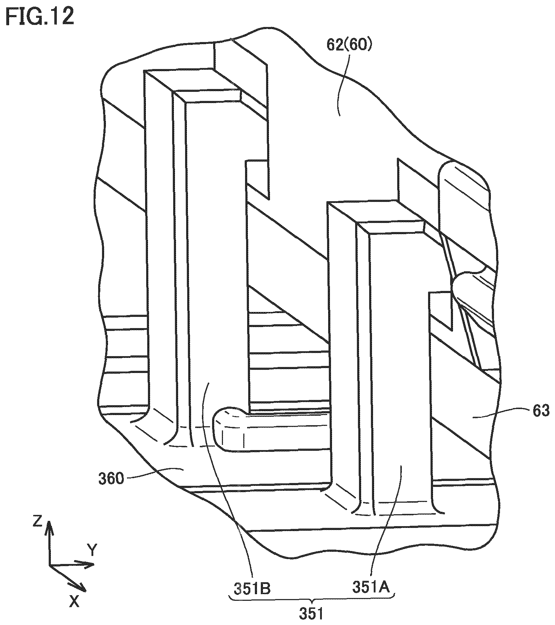

Fig. 11 is a perspective view showing a structure of wall portion 340. Fig. 12 is a perspective view showing a structure of claw portion 351. As shown in Figs. 11 and 12, substrate unit 60 includes a substrate 61, a cover member 62, and a base 63.

As shown in Fig. 11, each of wall portions 341, 342 is formed to protrude from cover member 360 of bus bar module 30 in the Z axis direction. In the example of Fig. 11, substrate unit 60 is positioned in the X axis direction with respect to bus bar module 30 by pressing the side surface of substrate unit 60 against wall portions 341, 342. The number or arrangement of wall portions 340 can be appropriately changed.

As shown in Fig. 12, claw portion 351 includes two claw portions 351A, 351B each formed to protrude from cover member 360 of bus bar module 30 in the Z axis direction. When substrate unit 60 is positioned in the X axis direction by wall portions 340, each of claw portions 351A, 351B can be engaged with a recess or hole portion provided in cover member 62 of substrate unit 60. Although not shown in Fig. 12, claw portion 352 can also have the same structure as that of claw portion 351. With each of claw portions 351, 352, displacement of substrate unit 60 in the Z axis direction is suppressed. The number or arrangement of claw portions 350 can be appropriately changed.

As described above, each of bus bar modules 30A, 30B, 30C is positioned with respect to case 20 in the X axis direction and the Y axis direction. By positioning substrate unit 60 with respect to bus bar module 30, substrate unit 60 can be positioned with respect to case 20.

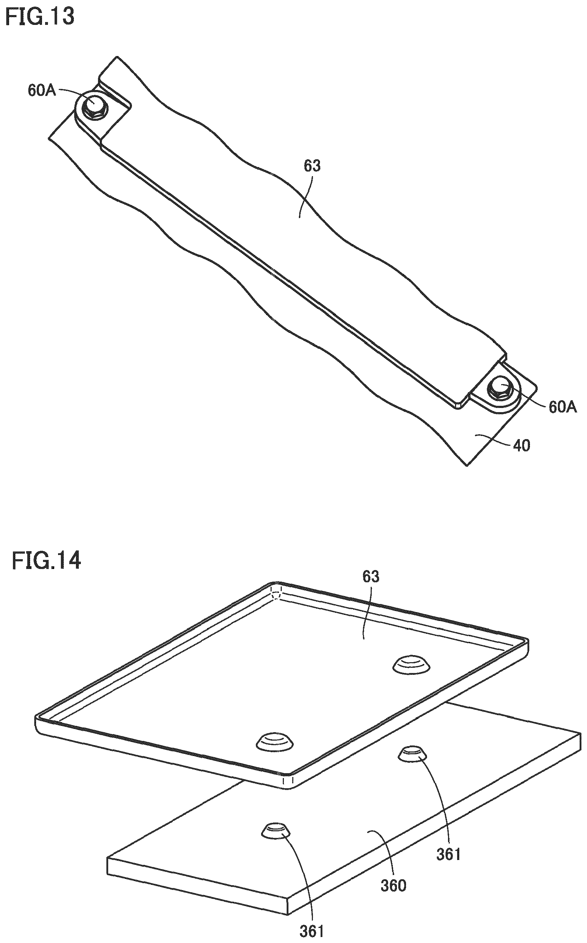

Fig. 13 is a perspective view showing fastening portions 60A. As shown in Fig. 13, base 63 of substrate unit 60 and junction box 40 are fastened to each other at each fastening portion 60A. Thereafter, housing 460 of junction box 40 is fixed to inclined surface 23A of case 20 at fastening portions 450. It should be noted that instead of fastening substrate unit 60 to junction box 40 or in addition to fastening substrate unit 60 to junction box 40, substrate unit 60 may be fastened to bus bar module 30.

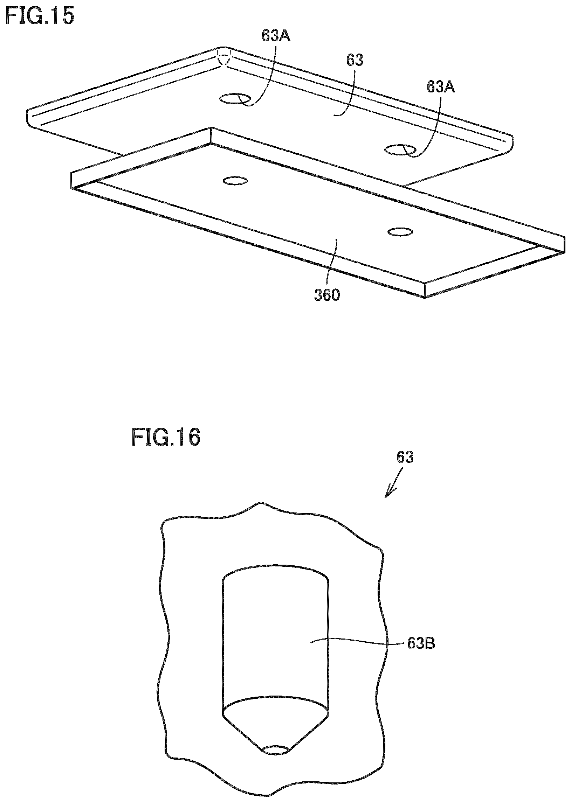

Fig. 14 is a perspective view showing a modification of substrate unit (60) that does not fall within the scope of the present invention, and Fig. 15 is a perspective view showing a state of the structure shown in Fig. 14 when viewed in a different direction. In the modification shown in Figs. 14 and 15, protuberances 361 are provided in cover member 360 of bus bar module 30, holes 63A are provided in base 63 of substrate unit 60, and protuberances 361 are fitted into holes 63A, thereby positioning substrate unit 60. Each of holes 63A may be a hole having a bottom or may be a through hole.

Fig. 16 is a perspective view showing still another modification of substrate unit (60) that does not fall within the scope of the present invention. As shown in Fig. 16, base 63 of substrate unit 60 may be provided with a protuberance 63B and protuberance 63B may be fitted into a hole (not shown) provided in cover member 360 of bus bar module 30, thereby positioning substrate unit 60.

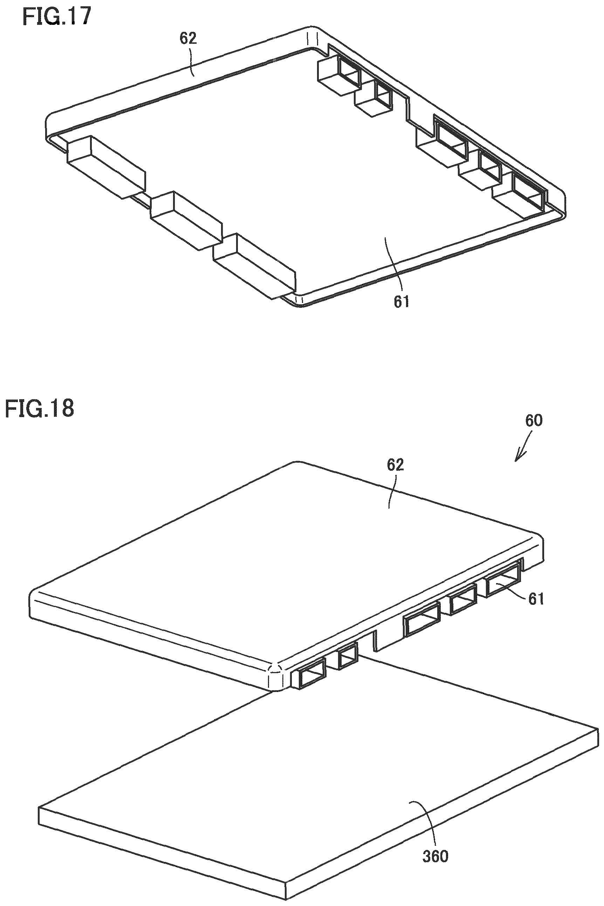

Fig. 17 is a perspective view showing yet another modification of substrate unit (60) that does not fall within the scope of the present invention, and Fig. 18 is a diagram showing a state in which substrate unit 60 shown in Fig. 17 is attached to cover member 360 of bus bar module 30.

In the example shown in Figs. 17 and 18, base 63 of substrate unit 60 is not provided, and substrate unit 60 and cover member 360 of bus bar module 30 are integrated. As shown in Fig. 18, after substrate unit 60 and cover member 360 are combined, substrate unit 60 and the cover member thus combined are assembled to bus bar module 30 and junction box 40.

In battery pack 1 according to the present embodiment, since the positioning mechanism for substrate unit 60 is provided in bus bar module 30, substrate unit 60 can be precisely positioned also in the Cell-to-Pack structure in which a module member such as a binding bar does not exist, thereby simplifying the manufacturing process. It should be noted that the positioning of substrate unit 60 may be temporary positioning until substrate unit 60 is fastened to another component such as junction box 40.

Although the embodiments of the present invention have been described and shown in detail, it is clearly understood that the same is by way of illustration and example only and is not to be taken by way of limitation. The scope of the present invention is defined by the terms of the claims.

## Claims

1. A battery pack (1) comprising:
a stack (10) including a plurality of battery cells (100) arranged side by side in a first direction (Y);
a case (20) that has a side wall (21) facing the stack (10) in the first direction (Y) and that accommodates the stack (10);
a bus bar module (30) including a bus bar (320) and a plate member (310), the bus bar (320) being disposed on the stack (10), the bus bar (320) electrically connecting the plurality of battery cells (100), the plate member (310) accommodating the bus bar (320);
an electrical device (40) arranged side by side with the stack (10) along a second direction (X) orthogonal to the first direction (Y); and
a substrate unit (60) at least partially disposed on the bus bar module (30) and including a substrate (61), a cover member (62) and a base (63), wherein the substrate (61) is electrically connected to the stack (10) and the electrical device (40), wherein
the bus bar module (30) has a positioning mechanism (340) for the substrate unit (60),
the base (63) of the substrate unit (60) is fastened to the electrical device (40) at a fastening portion (60A),
the positioning mechanism (340) is provided with a wall extending in a third direction (Z) orthogonal to the first direction (Y) and the second direction (X), and
the wall is configured to position the substrate unit (60) in the second direction (X) before or when fastening the substrate unit (60) to the electrical device (40) by pressing the substrate unit (60) against the wall.

2. The battery pack (1) according to claim 1, wherein the substrate unit (60) is disposed to extend from above the bus bar module (30) to above the electrical device (40).

3. The battery pack (1) according to claim 1 or 2, wherein the electrical device (40) includes a housing (460) that accommodates an electrical component electrically connected to the plurality of battery cells (100).

4. The battery pack (1) according to any one of claims 1 to 3, wherein the bus bar module (30) has another positioning mechanism (317, 330) that positions the bus bar module (30) in at least one of the first direction (Y) and the second direction (X).

## Patentansprüche

1. Batteriepack (1), aufweisend:
einen Stapel (10) mit einer Mehrzahl von Batteriezellen (100), die in einer ersten Richtung (Y) nebeneinander angeordnet sind;
ein Gehäuse (20), das eine Seitenwand (21) aufweist, die dem Stapel (10) in der ersten Richtung (Y) zugewandt ist, und den Stapel (10) aufnimmt;
ein Sammelschienenmodul (30), welches eine Sammelschiene (320) und ein Plattenelement (310) umfasst, wobei die Sammelschiene (320) auf dem Stapel (10) angeordnet ist, die Sammelschiene (320) die Mehrzahl von Batteriezellen (100) elektrisch verbindet und das Plattenelement (310) die Sammelschiene (320) aufnimmt;
eine elektrische Vorrichtung (40), die entlang einer zweiten Richtung (X) orthogonal zu der ersten Richtung (Y) neben dem Stapel (10) angeordnet ist; und
eine Substrateinheit (60), welche zumindest teilweise auf dem Sammelschienenmodul (30) angeordnet ist und ein Substrat (61), ein Abdeckelement (62) und eine Basis (63) umfasst, wobei das Substrat (61) elektrisch mit dem Stapel (10) und der elektrischen Vorrichtung (40) verbunden ist, wobei
das Sammelschienenmodul (30) einen Positionierungsmechanismus (340) für die Substrateinheit (60) aufweist,
die Basis (63) der Substrateinheit (60) an einem Befestigungsabschnitt (60A) an der elektrischen Vorrichtung (40) befestigt ist,
der Positionierungsmechanismus (340) mit einer Wand versehen ist, die sich in einer dritten Richtung (Z) orthogonal zu der ersten Richtung (Y) und der zweiten Richtung (X) erstreckt, und
die Wand derart konfiguriert ist, dass diese die Substrateinheit (60) in der zweiten Richtung (X) positioniert, bevor oder wenn die Substrateinheit (60) an der elektrischen Vorrichtung (40) befestigt wird, indem die Substrateinheit (60) gegen die Wand gedrückt wird.

2. Batteriepack (1) nach Anspruch 1, wobei die Substrateinheit (60) so angeordnet ist, dass sich diese von oberhalb der Sammelschiene (30) bis oberhalb der elektrischen Vorrichtung (40) erstreckt.

3. Batteriepack (1) nach Anspruch 1 oder 2, wobei die elektrische Vorrichtung (40) ein Gehäuse (460) umfasst, welches eine elektrische Komponente aufnimmt, die elektrisch mit der Mehrzahl von Batteriezellen (100) verbunden ist.

4. Batteriepack (1) nach einem der Ansprüche 1 bis 3, wobei das Sammelschienenmodul (30) einen weiteren Positionierungsmechanismus (317, 330) aufweist, welcher das Sammelschienenmodul (30) in der ersten Richtung (Y) und/oder der zweiten Richtung (X) positioniert.

## Revendications

1. Un bloc-batterie (1) comprenant :
un empilement (10) comprenant une pluralité de cellules de batterie (100) disposées côte à côte dans une première direction (Y) ;
un boîtier (20) qui présente une paroi latérale (21) tournée vers l'empilement (10) dans la première direction (Y) et qui loge l'empilement (10) ;
un module de barres omnibus (30) comprenant une barre omnibus (320) et un élément en plaque (310), la barre omnibus (320) étant disposée sur l'empilement (10), la barre omnibus (320) reliant électriquement la pluralité de cellules de batterie (100), l'élément en plaque (310) logeant la barre omnibus (320) ;
un dispositif électrique (40) disposé côte à côte avec l'empilement (10) le long d'une deuxième direction (X) orthogonale à la première direction (Y) ; et
une unité de substrat (60) disposée au moins partiellement sur le module de barres omnibus (30) et comprenant un substrat (61), un élément de couvercle (62) et une base (63), dans lequel le substrat (61) est connecté électriquement à l'empilement (10) et au dispositif électrique (40), dans lequel
le module de barres omnibus (30) comporte un mécanisme de positionnement (340) pour l'unité de substrat (60),
la base (63) de l'unité de substrat (60) est fixée au dispositif électrique (40) au niveau d'une partie de fixation (60A),
le mécanisme de positionnement (340) est muni d'une paroi s'étendant dans une troisième direction (Z) orthogonale à la première direction (Y) et à la deuxième direction (X), et
la paroi est configurée pour positionner l'unité de substrat (60) dans la deuxième direction (X) avant ou lors de la fixation de l'unité de substrat (60) au dispositif électrique (40) en pressant l'unité de substrat (60) contre la paroi.

2. Le bloc-batterie (1) selon la revendication 1, dans lequel l'unité de substrat (60) est agencée de manière à s'étendre depuis le dessus du module de barres omnibus (30) jusqu'au-dessus du dispositif électrique (40).

3. Le bloc-batterie (1) selon la revendication 1 ou 2, dans lequel le dispositif électrique (40) comprend un boîtier (460) qui loge un composant électrique connecté électriquement à la pluralité de cellules de batterie (100).

4. Le bloc-batterie (1) selon l'une quelconque des revendications 1 à 3, dans lequel le module de barres omnibus (30) comporte un autre mécanisme de positionnement (317, 330) qui positionne le module de barres omnibus (30) dans au moins l'une de la première direction (Y) et de la deuxième direction (X).
